# EUROPEAN PATENT APPLICATION

(11) **EP 1 574 311 A1**
(43) Date of publication of application: **14.09.2005**
(21) Application number: 04100976.2
(22) Date of filing: 10.03.2004
(51) Int. Cl.: B29C 41/04, B29C 41/52

(54) **Rotational moulding powder characterisation**

(71) Applicant: TOTAL PETROCHEMICALS RESEARCH FELUY, 7181 Seneffe (Feluy) (BE)
(72) Inventor: Maziers, Eric, B-7181, Seneffe (BE); DEWITTE, Damien, B-4000, Liège (BE)

(57) **Abstract**

This invention discloses the use of a CCD camera to record in real time and simultaneously all the parameters related to a rotomoulding cycle, such as melting temperature, coalescence, bubble removal and crystallisation temperature.

## Description

This invention relates to the use of a digital camera to characterise, in one step, several melting characteristics of thermoplastic powders that are useful in the field of rotational moulding or other powder application process es.

In the past, several methods have been developed, each dedicated to the analysis of one of the many powder properties.

Sintering or coalescence is measured according to a method developed at Mac Master University and described for example in Bellehum eur et al. (C.T. Bellehumeur, M.K. Bisaria, and J. Vlachopoulos, in Polymer engineering and Science, 36, 2198, 1996.) Experiments were conducted on pairs of particles inside a hot stage microscopy setup with the objective to study the coalescence. These experiments led to the conclusion that the geometry of the particles did not influence the sintering rate. It was found that the sintering rate increased when the viscosity decreased, this effect however becoming less important as the particle size decreased.

Bubble formation mechanism in rotational moulding has also been studied at McMaster University and is described in Kontopoulo et al. (M. Kontopouto, E. Takacs, and J. Vlachopoulos, in Rotation, 28, January 2000.). In rotational moulding, the polymer tends to melt freely because no external forces are applied. Air pockets or bubbles are trapped during melting, thus delaying the formation of a homogeneous melt and also affecting the mechanical and aesthetic properties of the finished product. It is thus im portant to understand the factors influencing the formation and evolution of these bubbles. The study was conducted with an optical microscope on linear low density polyethylene (LLDPE) resins having different melt flow indices. It was observed that high viscosity is associated with a long time for the particles to coalesce. It was further observed that fast coalescence rate is associated to the formation of few bubbles.

The polymers that can be used in the field of rotational moulding comprise LLDPE, high density polyethylene (HDPE) random copolymer of propylene, block copolymer of propylene and polyamide (PA), polyvinylidene fluoride (PVDF), polyvinyl chloride (PVC), acrylobutadiene styrene (ABS). As these resins have very different properties, there is a need to develop a method that can quickly and accurately determine the best operational conditions.

It is an aim of the present invention to provide a method for obtaining instantaneous information in two or three dimensions on the geometry of the starting grains or pellets.

It is also an aim of the present invention to develop a method to characterise the melting properties and the coalescence process of thermoplastic powders.

It is another aim of the present invention to develop a method to characterise the densification process of molten resins.

It is yet another aim of the present invention to characterise the surface characteristics of rotomoulded articles.

It is also an aim of the present invention to provide instantaneous information on the crystallisation process.

It is yet a further aim of the present invention to correct in real time the rotational moulding parameters.

It is also aim of the present invention to transmit the information collected inside the rotomoulding cavity with the help of an endoscope.

It is another aim of the present invention to study the foaming kinetics of polymer powders or the cross-linking kinetics of polymer powders.

It is yet another aim of the present invention to characterise and control the granulometry of powders and micropellets or pellets.

Accordingly, the present invention discloses the use of a charge -coupled device (CCD) camera to characterise in a single step the properties of thermoplastic powders during a rotomoulding cycle or during sintering and de nsification simulations.

The properties of thermoplastic powders are measured during a rotomoulding cycle or during a rotomoulding simulation, starting from the powder at room temperature, increasing the temperature to a temperature larger than the fusion temperature in order to completely melt the powder, followed by reducing the temperature to crystallise the material and further reducing the temperature down to room temperature (about 25 °C). These properties are:
- geometry of the grains or of the pellets;
- fusion temperature;
- sintering or coalescence of powder;
- densification or bubble removal of molten material;
- crystallisation temperature;
- release from the mould.

The thickness of the bed to be analysed is not particularly limited: it may vary from 0.1 up to 30 mm.

The analysis can be carried out either on the surface of the material or laterally depending upon the type of experiment and of the heating equipment.

The resins used in rotational moulding are typically in powder form wherein the average grain size is of from 10 to 2000 µm, preferably of from 100 to 800 µ and more preferably of from 300 to 500 µm. A broad grain size distribution is preferably targeted. The grinding conditions depend upon the nature of the resin: for example, linear low density polyethylene resin is ground at a temperature of from 40 to 80°C, whereas polypropylene and polyamide resins undergo cryogenic grinding. The term "cryogenic" implies that the temperature is below -200 °C. Alternatively, the resin can be prepared under the form of micropellets with the advantages of a good flowability and a narrow particle size distribution.

### List of Figures.

Figure 1 represents the temperature of air inside the mould expressed in degrees centigrade as a function of time expressed in minutes for a complete cycle in rotational moulding applications.

Figure 2 represents the evolution of coalescence, expressed by the ratio y/r, as a function of time expressed in seconds, for different types of resins.

Figure 3 is a picture of the coalescence process.

Figure 4 represents the sintering characterisation process. The upper graph is the sample temperature expressed in degrees centigrade as a function of time expressed in minutes. The lower graph represents the derivative of temperature with respect to time expressed in degrees centigrade per minutes as a function of time expressed in minutes.

Figure 5 represents the evolution of coalescence, expressed by the ratio y/r, as a function of time expressed in seconds, for linear low density polyethylenes having different melt indices.

Figure 6 represents the sintering time expressed in minutes for micropellets and for powders for two identical polyethylene resins prepared with ethylene -bis-tetrahydroindenyl zirconium dichloride having a melt flow index MI2 of 4.09 dg/min and a density of 0.940 g/cm³.

Figure 7 represents the densification expressed in mm ⁻² by the number of bubbles per mm² Na, as a function of temperature expressed in degrees centigrade for the same polyethylene resin as that of Figure 6.

Figure 8 represents the camera set -up that was used to simulate a rotomoulding cycle.

Figure 9 represents the camera set -up that was used to study the bubble content in rotomoulded parts.

Figure 10 represents the camera set -up that was used to control the granulometry.

Figure 11 represents a sequence of photographs showing the coalescence process.

Figure 12 represents a sequence of photographs showing the bubble removal process.

Figure 13 represents a set-up for a grinding application.

The melt flow index MI2 is measured following the method of standard test ASTM D 1238 under a load of 2.16 kg and at a temperature of 190 °C.

Rotational moulding comprises three main steps, each of which having an impact on the cycle time. These steps comprise :
- sintering or coalescence;
- densification or bubble removal;
- crystallisation.

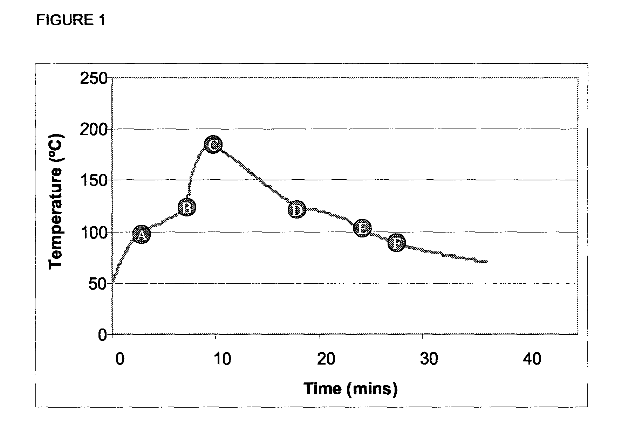

This can be seen in Figure 1 that represents the temperature expressed in degrees centigrade as a function of time expressed in minutes during a rotomoulding cycle. The first in flexion in the curve noted as point A marks the beginning of the sintering or coalescence of the powder. Sintering in the present application represents the coalescence of the powder grains or of the micropellets. The next inflexion in the curve noted as point B marks the beginning of the densification process of the molten polymer. Densification in the present application means bubbles removal. Sintering and densification are considered throughout this application as two distinct processes: they vary independently with the rotomoulding parameters and with the resin's properties.

Point C on the curve represents the Peak Internal Air Temperature (PIAT), followed by point D that marks the beginning of the crystallisation process. Point E is associated with th e time at which the rotomoulded article is completely solidified and starts receding from the walls of the mould. Point F marks the opening of the mould.

The various steps in the rotomoulding process are influenced by "internal" parameters such as the nature of the polymers, their viscosity and their rheological properties and by "external" parameters such as the PIAT, or the oven temperature, or the mould type, or the cooling rate.

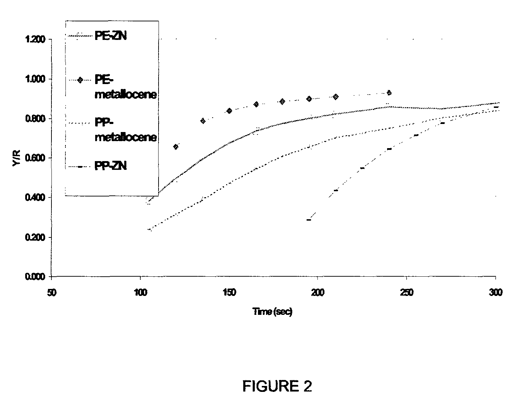

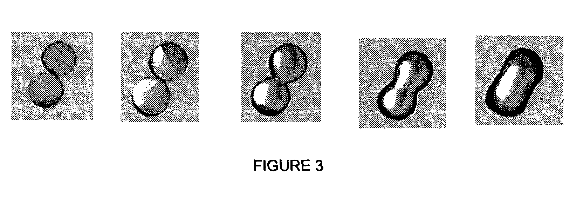

The sintering rate is a function of the choice of resin as can be seen in figure 2 representing the ratio y/r as a function of time for polypropylene, linear low density polyethylene and polyamide. The ratio y/r can best be described and understood from figure 3 representing the coalescence process of two grains. r represents the radius of the individual grains and y is a measure of the contact between the grains. When the grain just touch, y is equal to zero and it progressively increases as the grains coalesce to be equal to r when coalescence is complete.

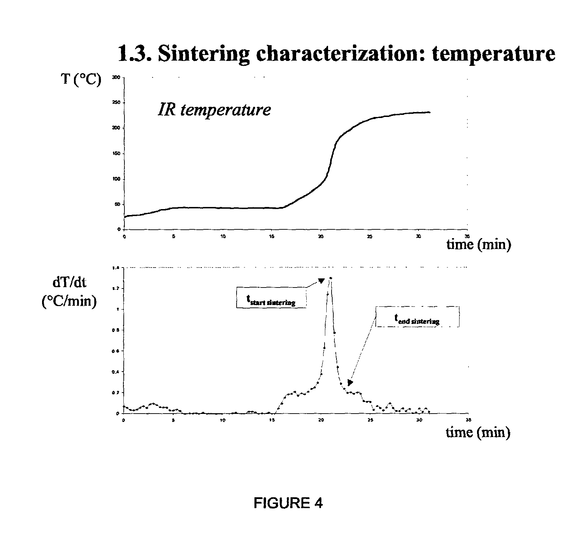

The sintering process has been characterised completely by the temperature curve as a function of time and by the first derivative of temperature with respect to time as a function of time as represented on Figure 4. The time t _{start sintering} where the temperature derivat ive reaches a maximum is the main coalescence point, and the subsequent time t _{end sintering} where it reaches a plateau is the final coalescence point.

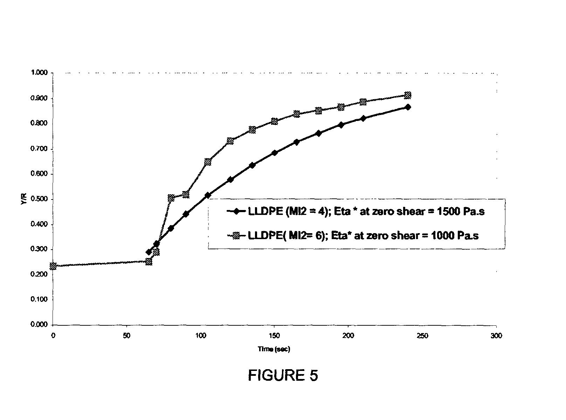

The sintering rate is also a function of the resin's viscosity as can be seen in figure 5 representing the sintering rate expressed by y/r as a function of time expressed in seconds for two linear low density polyethylenes having respectively a melt index MI2 of 4 dg/min and of 6 dg/min.

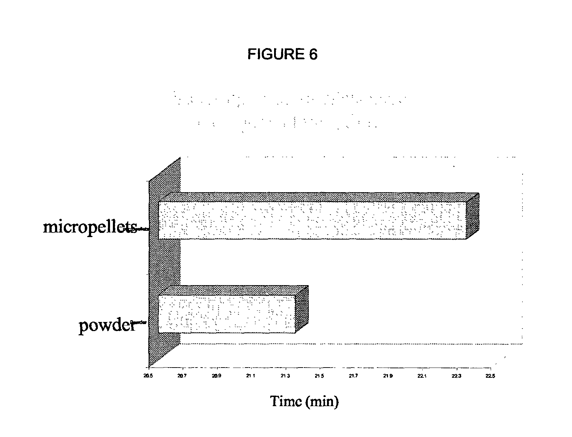

The granulometry also plays an important role in the coalescence pro cess as well as the surface tension of the resin. It can be seen in Figure 6 that all other factors being equal, micropellets have a substantially longer sintering time than powders. In this disclosure, micropellets have sizes ranging from 200 up to 800 µm and powders have sizes ranging from 10 to 500 µm.

The densification process or bubble removal is a function of the PIAT, it also varies with the viscosity and the elastic component (G') of the resin. It improves with increasing PIAT, decreasing viscosity and decreasing elastic component G'.

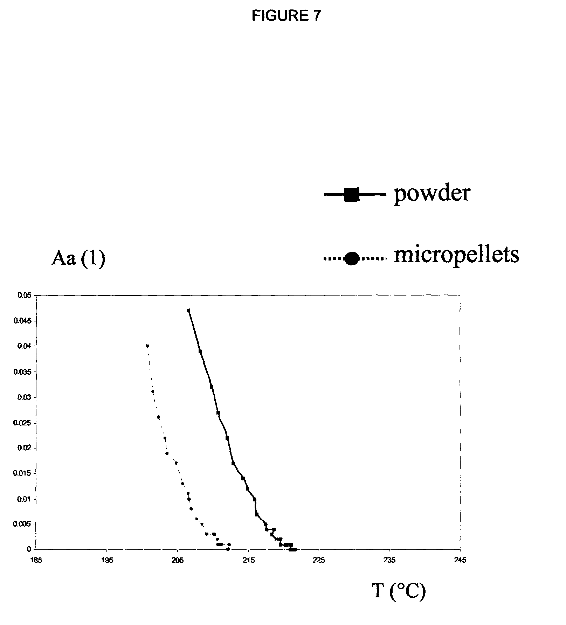

The granulometry also plays an important role in the densification process. It can be seen from Figure 7 that micropellets have a better and faster bubble removal than powders.

The crystallisation step is a function of the cooling rate and of the nature of the resin.

The surface microstructure is a function of the cooling rate, of the PIAT and of the nature of the resin.

All these various parameters are monitored at once with the CCD camera and the information is processed in real time allowing a modification of the rotomoulding parameters or of the powder granulometry in order to reach optimal conditions.

The present invention discloses the use of one or more charge -coupled device (CCD) camera(s) for charac terising instantaneously and simultaneously the various parameters that influence the rotomoulding cycle and the characteristics of the rotomoulded article.

A charge-coupled device is a light sensitive integrated circuit that stores and displays the data for an image in such a way that each picture element (pixel) in the image is converted into an electrical charge, the intensity of which is related to the intensity of light striking it. CCDs can be included in both still and video cameras. In the present invention still cameras are used for optical character recognition. The captors presently used are 16 -bit CCD sensors working in black and white: they provide 2¹⁶ shades of grey.

In the high performance two -phase charge-coupled sensors of the present invention a transparent electrodes replaces one of the polysilicon gates. The transparent gate is less absorptive than polysilicon and its index of refraction provides a better match between the overlying oxide and the silicon substrate than that of the polysilicon, resulting in less reflective loss. The sensors are built with a true two-phase buried channel CCD process that is optimised for operations in multi-pinned phase (MPP) mode for low dark current. The low dark current produces the best signal-to-noise ratio when sensors are operated at low signal levels .The true two-phase architecture provides many advantages such as progressive scan, square pixels, high charge capacity and simplified drive requirements. The photon -to-electron conversion ratios of most CCDs are similar, but the size of the photosensitive area makes their performance unequal. Responsivity is a measure of the signal that each pixel can produce and is directly proportional to the pixel area. As the responsivity of the pixel increases, the same amount of signal can be collected in a shorter time or conversely, more signal can be collected during a fixed exposure time. In addition, with low -level iliumination, the image has a higher signal -to-noise ratio and appears less grainy. Larger pixel areas also help improve the dynamic range because they hold more charge and are thus not saturated quickly with bright objects.

The present CCD camera system is used for characterising the behaviour of various polymers during the rotomoulding cycle. These polymers can de selected for example from polyethylene (PE), polypropylene (PP), polystyrene (PS) polyvinyl chloride (PVC), polyamide (PA), polymethyl methacrylate (PMMA), polyoxymethylene (POM), acrylonitrile -butadiene-styrene (ABS), polycarbonate (PC), polyacrylonitrile (PAN), styrene -acrylonitrile (SAN), ethylene vinyl acetate (EVA) or polyvinylidene fluoride (PVDF). Preferably, PE, PP and PA have been used and more preferably PE.

The present invention also discloses a method for monitoring a rotomould ing cycle that comprises the steps of:
- providing a CCD camera;
- optionally providing a light source;
- recording the time at each shot;
- recording the digital information at each shot;
- sending the information to a computer that analyses the information in real time,

The camera can record up to 20 images/s.

In order to retrieve the information in real time during the rotomoulding cycle, it is advantageous to use an endoscope or equivalent system wherein the endoscope's observation module is equipped with a prism made of a transparent material and mounted on a support inside the rotomoulding cavity.

The method according to the present invention may also comprise the additional step of providing a feedback software, capable of adjusting the rotomoulding parameters such as PIAT, rotational speed or cooling rate in order to instantaneously optimise the cycle time, the sintering rate, the densification process and/or the properties of the final product such as for example surface microstructure, shrinkage.

### Examples.

The CCD sensor used in the present application is a megapixel progressive scan interline CCD with on-chip circuits commercialised by Kodak.
It has the following parameters:
- architecture : interline CCD, progressive scan, non -interlaced
- pixel count: 1000(H) x 1000(V)
- pixel size : 7.4 microns(H) x 7.4 microns(V)
- photosensitive area : 7.4 mm(H) x 7.4 mm(V)
- output sensitivity : 12 microvolt/electron
- saturation signal : 40,000 electrons
- dark noise : 40 electrons rms
- dark current (typical): < 0.5 nA/cm²
- dynamic range : 60 dB
- quantum efficiency at 500, 540, 600 nm : 36%, 33%, 26%
- blooming suspension : 100X
- image lag : < 10 electrons
- smear: < 0.03%
- maximum data rate : 40 MHz/channel (2 channels)
- integrated vertical clock drivers
- integrated correlated double sampling (CDS)
- integrated electronic shutter driver

The high performance 15 -bit (16 bits - 1 bit for control) CCD sensor with transparent gate electrode provides 32768 unsigned levels of grey, allows the acquisition of about 10,000 frames/s and covers a b road spectrum of from 400 to 1000 nm.

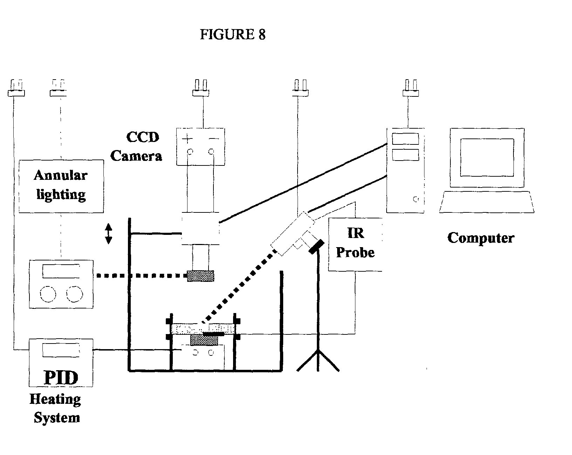

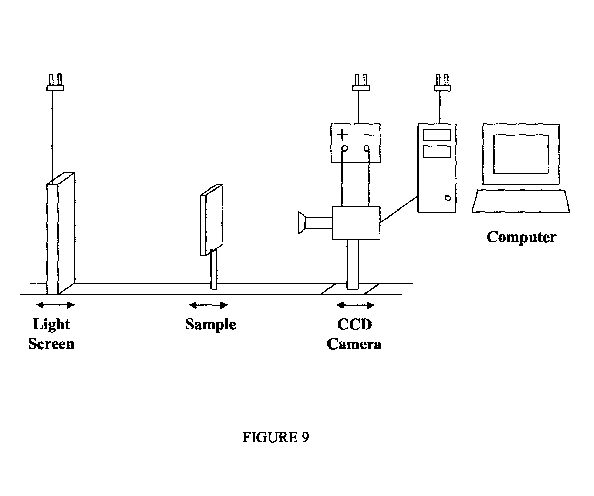

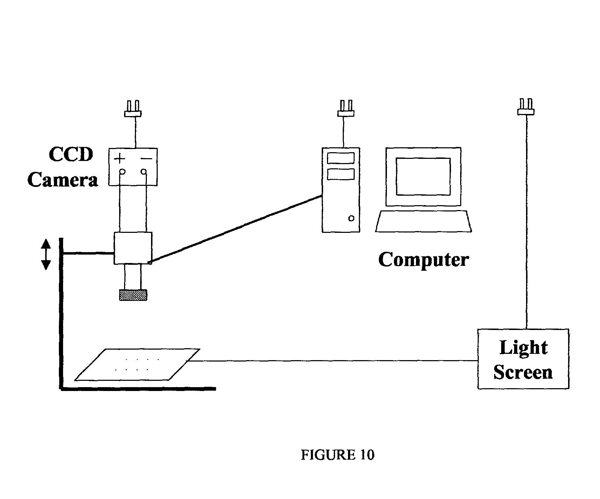

Several sample-camera set-ups have been tested in rotomoulding simulations, depending upon the parameters that were preferably studied, as displayed in Figures 8, 9 and 10.

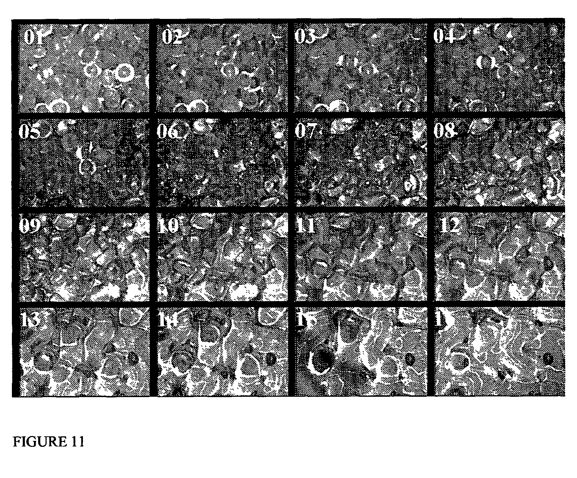

A typical example of sintering sequence obtained with the set-up of Figure 8 is displayed in Figure 11. The evolution of coalescence is clearly and instantaneously monitored.

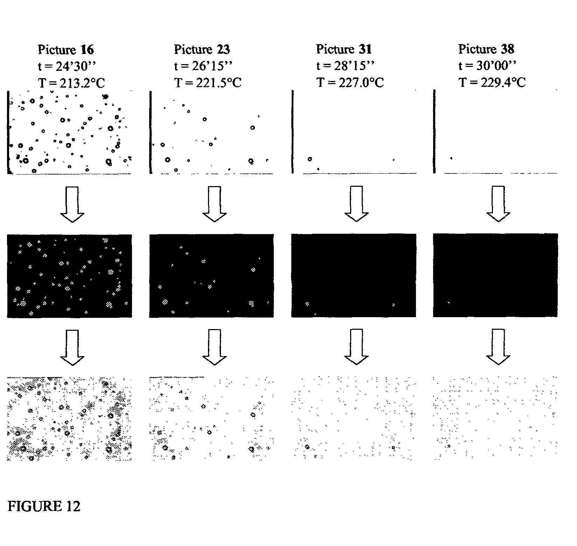

A typical example of bubble removal sequence also obtained with the set -up of Figure 8 is displayed in Figure 12. The progr essive disappearance of bubbles as a function of time and temperature is clearly and instantaneously followed. In addition to the visual aspect, the computer instantaneously produces a set of parameters resulting from picture analysis. These parameters are explained in Table I. The results, derived from the example of Figure 12, are displayed in Table II.

**TABLE I.**

| Parameter | Unit | Description |
|---|---|---|
| Ex | - | picture number |
| t | min | time of picture |
| T | °C | IR temperature of sample |
| N | - | number of bubbles o n the picture |
| Na | mm⁻² | number of bubbles per mm² |
| A | µm² | total area covered by bubbles |
| Aa | - | percentage of total picture area covered by bubbles |
| Dₐᵥ | µm | average distance between 2 bubbles |
| S | µm² | average area of one bubble |
| Cr | µm | perimeter of one bubble base d on Crofton's integral |
| D_{eq} | µm | equivalent diameter of one bubble |
| L | µm | largest side of one bubble |
| W | µm | smallest side of one bubble |
| LO | degree | orientation of the largest side |
| WO | degree | orientation of the smallest side |

The average distance between two bubbles Dₐᵥ is defined as Dₐᵥ = 4 (1 -Aa)/Sv
wherein Sv = 4π (D_{eq}/2)² . Aa / ((4π/3) (D_{eq}/2)³)
wherein the equivalent bubble diameter D_{eq} is defined in terms of the average surface of one bubble S by the equation S = 4π (D _{eq}/2)².

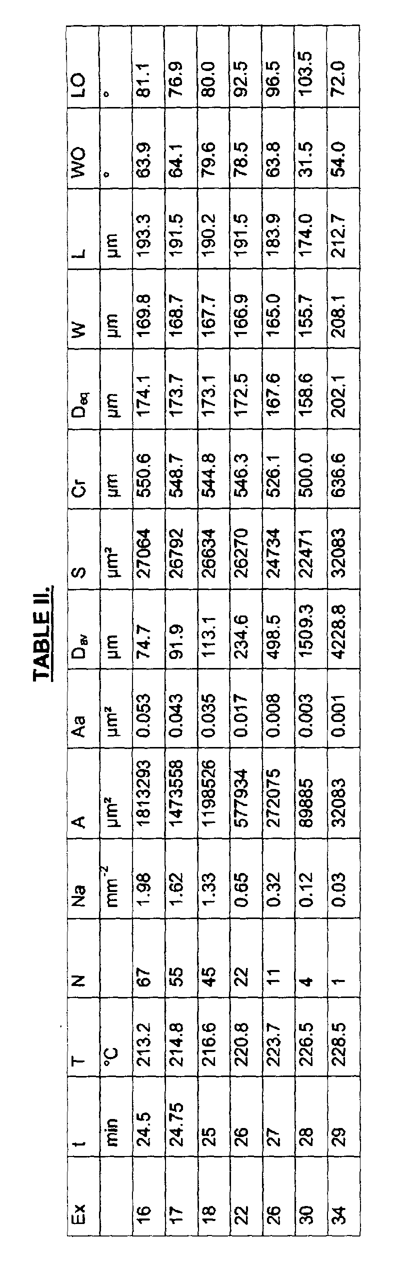

A similar analysis can be carried out for granulometry. Each particle is characterised by 9 shape factors: the particle area (A), the Crofton perimeter (Cr), the equivalent diameter (D _{eq}), the average width (W), the average length (L), the width orientation (WO), the length orientation (LO), the shape factor (Sh) defined by the ratio Cr/ (4πΣ) ^{0.5} wherein Σ is the total surface of the picture, and the elongation (E) defined by the ratio L/W. A powder can be completely described by about 12 pictures and the program additionally computes the average and standard deviation σ for each of the 9 shape factors. Typical results are displayed in Table III.

**TABLE III.**

| Ex | A | Cr | D_{eq} | W | L | WO | LO | Sh | E |
|---|---|---|---|---|---|---|---|---|---|
| | µm² | µm | µm | µm | µm | ° | ° | | |
| 1 | 40543 | 684.3 | 227.2 | 180.1 | 324.4 | 90 | 36 | 0.9 | 1.8 |
| 2 | 8109 | 187.7 | 101.6 | 90.0 | 125.8 | 0 | 36 | 0.3 | 1.4 |
| 7 | 24326 | 542.9 | 176.0 | 90.0 | 284.7 | 90 | 18 | 1.0 | 3.2 |
| 10 | 8109 | 187.7 | 101.6 | 90.0 | 125.8 | 0 | 36 | 0.3 | 1.4 |
| ... | | | | | | | | | |
| min | 8109 | 140.3 | 101.6 | 90.0 | 125.8 | 0 | 0 | 0.2 | 1.1 |
| max | 308124 | 2947.0 | 626.4 | 629.5 | 1053.3 | 162 | 162 | 2.8 | 4.1 |
| average | 41290 | 629.5 | 208.9 | 189.9 | 291.5 | 35.75 | 68.33 | 0.8 | 1.6 |
| σ | 37993 | 371.3 | 94.5 | 98.0 | 134.4 | 47.03 | 44.79 | 0.4 | 0.4 |

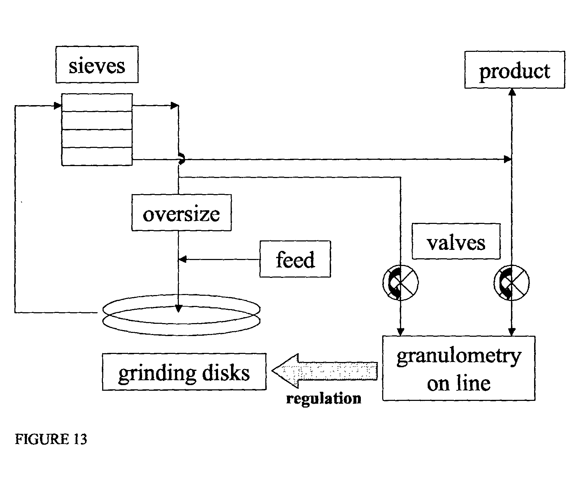

As this information is provided in real time, the grinding parameters can be adjusted to modify the granulometry as desired, either manually or using a feedback software. A grinding set -up is represented in Figure 13.

This granulometry control can also be connected to the rotomo ulding process and the particle size can be adjusted in order to optimise the rotomoulding cycle.

## Claims

1. A method for monitoring a rotomoulding cycle that comprises the steps of:
- providing a CCD camera;
- optionally providing a light source;
- recording the time at each shot;
- recording the digital information relative at each shot;
- sending the information to a computer that analyses the information in real time.

2. The method according to claim 1 wherein the CCD sensor is a two -phase charge-coupled sensor with a transparent electrode.

3. The method according to claim 1 or claim 2 wherein the digital information recorded is related the grain size of the starting material.

4. The method according to any one of claims 1 to 3, wherein the digital information recorded is related to the melting temperature of the resin, the sintering process, the densification process, the crystallisation temperature and the surface microstructure of the finished article.

5. The method according to any one of the preceding claims, wh erein the digital information recorded is sent to a feedback software in order to instantaneously adjust the production parameters .

6. Use of the CCD camera of any one of claims 1 to 4 to record in real time and simultaneously all the parameters related to a rotomoulding cycle, such as melting temperature, coalescence, bubble removal and crystallisation temperature.

7. Use of the CCD camera according to any one of claims 1 to 4 to determine the optimal grain size and grain size distribution of the starting material.

8. Use of the CCD camera linked to a feedback software of claim 5 to optimise the production parameters in real time.
